# EUROPÄISCHE PATENTANMELDUNG

(11) **EP 3 621 159 A1**
(43) Veröffentlichungstag der Anmeldung: **11.03.2020**
(21) Anmeldenummer: 19195716.6
(22) Anmeldetag: 05.09.2019
(51) Int. Cl.: H01R 11/28

(54) **BATTERIEPOLKLEMME**

(30) Priorität: 10.09.2018 DE 102018215347
(71) Anmelder: Continental Automotive GmbH, 30165 Hannover (DE)
(72) Erfinder: Frenzel, Henryk, 93059 Regensburg (DE); Schnelzer, Christoph, 92318 Neumarkt (DE)

(57) **Zusammenfassung**

Die Erfindung betrifft eine Batteriepolklemme (10), insbesondere für eine Fahrzeugbatterie (12) in einem Fahrzeug, mit einem Klemmabschnitt (24) für einen Batteriepol (14) der Fahrzeugbatterie (12), der einen, insbesondere im Wesentlichen zylindrischen, Aufnahmeraum (20) für den Batteriepol (14) der Fahrzeugbatterie (12) in Umfangsrichtung zumindest abschnittsweise umschließt und in Umfangsrichtung eine Unterbrechung (26) mit einander zugewandten Rändern (28, 30) aufweist, wobei an einem ersten Rand (28) des Klemmabschnitts (24)eine erste Aufnahme (32) für ein Spannmittel (36) und an einem zweiten Rand (30) des Klemmabschnitts (24) eine zweite Aufnahme (34) für das Spannmittel (36) vorgesehen sind, wobei die erste Aufnahme (32) eine erste Stützfläche (62) für das Spannmittel (36) und die zweite Aufnahme (30) eine zweite Stützfläche (76) für das Spannmittel (36) aufweist, wobei die die erste Stützfläche (62) und die zweite Stützfläche (64) relativ zueinander geneigt sind.

## Beschreibung

Die Erfindung betrifft eine Batteriepolklemme, insbesondere für eine Fahrzeugbatterie in einem Fahrzeug.

Batteriesensoren werden in Fahrzeugen eingesetzt, um Informationen über den Batteriezustand, beispielsweise den Ladezustand der Batterie, zu erhalten. Der Batteriesensor ist üblicherweise an einem der Batteriepole der Fahrzeugbatterie, insbesondere am Minuspol der Fahrzeugbatterie, befestigt. Der Batteriesensor hat hierzu üblicherweise eine Batteriepolklemme, die auf den Batteriepol aufgesteckt und an diesem verklemmt wird, beispielsweise, indem über ein Spannmittel der Durchmesser eines Aufnahmeraums für den Batteriepol reduziert wird.

Die Batteriepolklemme muss einen zuverlässigen Halt des Batteriesensors an der Fahrzeugbatterie, insbesondere am Batteriepol, sicherstellen, um eine zuverlässige Stromversorgung der Verbraucher im Fahrzeug sowie eine zuverlässige Bestimmung bzw. Erfassung des Batteriezustandes sicherzustellen.

Des Weiteren ist eine einfache Montage der Batteriepolklemme am Batteriepol, insbesondere eine einfache Erreichbarkeit des Spannmittels mit einem Werkzeug, erwünscht. Der Batteriepole ist üblicherweise in einer Polnische angeordnet, die durch eine quaderförmige Aussparung an einer Ecke der Fahrzeugbatterie gebildet ist. Der Batteriepol erstreckt sich von einer rechteckigen Grundfläche der Polnische ausgehend von einem Batteriepolsockel senkrecht zur Grundfläche in die Aussparung. Die Erreichbarkeit der Batteriepolklemme wird hierbei durch die Polnische der Fahrzeugbatterie sowie weitere Bauteile im Motorraum eingeschränkt.

In einer einfachen Ausführungsform ist das Spannmittel eine Schraube, die sich bezüglich des Aufnahmeraums in Umfangsrichtung erstreckt. Die Erreichbarkeit der Schrauben, insbesondere mit einem Werkzeug, ist aber bei dieser Ausführungsform an der Batterieklemme sehr eingeschränkt. Alternativ ist bekannt, die Schraube schräg anzuordnen, wobei auch hier die Erreichbarkeit eingeschränkt sein kann.

Aus dem Stand der Technik sind des Weiteren Batteriepolklemmen mit einem in Längsrichtung des Aufnahmeraums angeordneten Spannmittel bekannt, wobei die in Längsrichtung des Aufnahmeraums wirkende Spannkraft des Spannmittels über Zwischenelemente in eine bezüglich des Aufnahmeraums radial wirkende Klemmkraft übertragen werden muss. Aufgrund der zusätzlichen Zwischenelemente ist der Aufbau und somit die Montage dieser Batteriepolklemme aber aufwendiger.

Aufgabe der Erfindung ist es, eine Batteriepolklemme mit einem einfachen Aufbau bereitzustellen, die eine einfache Montage mit hoher Klemmkraft an einer Fahrzeugbatterie ermöglicht.

Zur Lösung der Aufgabe ist eine Batteriepolklemme vorgesehen, insbesondere für eine Fahrzeugbatterie in einem Fahrzeug, mit einem Klemmabschnitt für einen Batteriepol einer Batterie, insbesondere einer Fahrzeugbatterie, der einen, insbesondere im Wesentlichen zylindrischen, Aufnahmeraum für den Batteriepol der Batterie in Umfangsrichtung zumindest abschnittsweise umschließt und in Umfangsrichtung eine Unterbrechung mit einander zugewandten Rändern aufweist. An einem ersten Rand des Klemmabschnitts ist eine erste Aufnahme für ein Spannmittel und an einem zweiten Rand des Klemmabschnitts ist eine zweite Aufnahme für das Spannmittel vorgesehen, wobei die erste Aufnahme eine erste Stützfläche für das Spannmittel und die zweite Aufnahme eine zweite Stützfläche für das Spannmittel aufweist. Die erste Stützfläche und die zweite Stützfläche sind relativ zueinander geneigt.

Die Stützflächen, an denen sich das Spannmittel abstützt, befinden sich also nicht in zueinander parallelen Ebenen, sondern in zueinander geneigten Ebenen. Das Spannmittel ist derart ausgebildet, dass sich dieses jeweils mit einer Anlagefläche an einer der Stützflächen abstützen kann, also an beiden Stützflächen abstützen kann. Beispielsweise ist das Spannmittel gebogen ausgebildet. Bei den bisher bekannten Batteriepolklemmen ist das Spannmittel so angeordnet bzw. ausgebildet, dass ein Werkzeug zum Spannen des Spannmittels im Wesentlichen in Längsrichtung des Spannmittels, die auch der Spannrichtung, in der die Aufnahmen aufeinander zu gezogen werden, entspricht. Bei der vorstehend beschriebenen Batteriepolklemme weicht die Aufsetzrichtung des Werkzeugs von der Wirkrichtung des Spannmittels ab. Dies ermöglicht eine Positionierung Spannmittels bzw. eine Werkzeugaufnahme des Spannmittels unabhängig von der Wirkrichtung des Spannmittels. Insbesondere kann die Werkzeugaufnahme des Spannmittels derart positioniert werden, dass eine sehr gute Erreichbarkeit der Werkzeugaufnahme sichergestellt ist, gleichzeitig aber die Spannrichtung des Spannmittels derart ausgerichtet ist, dass eine ideale Spannwirkung für die Batteriepolklemme erzielt werden kann.

Vorzugsweise verläuft ein Aufnahmekanal zur Führung des Spannmittels innerhalb der Aufnahmen zumindest an den Stützflächen abschnittsweise senkrecht zur jeweiligen Stützfläche. Das Spannmittel verläuft also im Bereich der Stützflächen senkrecht zur jeweiligen Stützfläche, sodass sich das Spannmittel jeweils mit einer Gegenfläche, die senkrecht zu Längsachse des Spannwirtes verläuft, an der Stützfläche abstützen kann. Dadurch ist zum einen eine verbesserte Kraftübertragung zwischen dem Spannmittel und der Stützfläche, also der Aufnahme gewährleistet. Zum anderen kann ein Spannelement, an dem die Gegenfläche vorgesehen ist, einfach am Spannmittel montiert werden.

Beispielsweise kann die erste Stützfläche in einer senkrecht zu Längsachse des Aufnahmeraums angeordneten Ebene verlaufen. Die Aufsetzrichtung für ein Werkzeug entspricht somit im Wesentlichen der Längsrichtung des Aufnahmeraums. Dies hat mehrere Vorteile. Zum einen kann das Werkzeug in Längsrichtung des Aufnahmeraums auf die Werkzeugaufnahme des Spannmittels aufgesetzt werden, sodass seitlich kein Bauraum für das Werkzeug freigehalten werden muss. Zudem entspricht die die Längsrichtung des Aufnahmeraums der Montagerichtung der Batteriepolklemme. Diese wird mit dem im Wesentlichen zylindrischen Aufnahmeraum in Längsrichtung auf dem Batteriepol aufgesetzt. Das Werkzeug wird anschließend in der gleichen Richtung auf die Werkzeugaufnahme des Spannmittels, also die Batteriepolklemme, aufgesetzt. Wird eine Druckkraft auf das Werkzeug aufgebracht, wird somit die Batteriepolklemme gegen den Batteriepol bzw. in die gewünschte Montageposition gegen den Sockel des Batteriepols gedrückt. Somit kann beim Spannen des Spannmittels sichergestellt werden, dass die Batteriepolklemme korrekt am Batteriepol positioniert ist.

Alternativ können sowohl die erste Stützfläche als auch die zweite Stützfläche bezüglich der Längsachse des Aufnahmeraums geneigt sein, beispielsweise, um eine bessere Spannwirkung, insbesondere eine höhere Spannkraft, zu erzielen.

Beispielsweise beträgt der Winkel, in dem die erste Stützfläche zur Längsachse des Aufnahmeraums geneigt ist, zwischen 35° und 55°, insbesondere 45°, und der Winkel, in dem die zweite Stützfläche zur Längsachse des Aufnahmeraums geneigt ist, ist größer als der Winkel, in dem die erste Stützfläche zur Längsachse geneigt ist. Insbesondere kann der Winkel, in dem die zweite Stützfläche zu Längsachse geneigt ist, zwischen 25° und 45°, insbesondere 34°, betragen.

Die erste Aufnahme kann eine erste Anlagefläche und die zweite Aufnahme eine zweite Anlagefläche aufweisen wobei die Anlageflächen einander zugewandt sind und in im Wesentlichen parallelen Ebenen verlaufen. Die Anlageflächen begrenzen gemeinsam mit den jeweiligen Stützflächen der Aufnahmen jeweils einen Aufnahmekanal für das Spannmittel innerhalb der jeweiligen Aufnahme. Vorzugsweise verläuft der Aufnahmekanal an den Anlageflächen abschnittsweise senkrecht zur jeweiligen Anlageflächen. Insbesondere verlaufen die Abschnitte des Aufnahmekanals, die senkrecht zur jeweiligen Anlagefläche verlaufen, auf einer gemeinsamen Geraden. Diese Gerade definiert im Wesentlichen die Spannrichtung des Spannmittels. Diese Spannrichtung kann somit unabhängig von der Position der jeweiligen Stützflächen ausgerichtet werden. Eine Biegung des Spannmittels bzw. eine Umlenkung des Spannmittels befindet sich also innerhalb der jeweiligen Aufnahme. Insbesondere schließen die erste Stützfläche und die erste Anlagefläche einen Winkel ein, wobei der Winkel so gewählt ist, dass eine gute Erreichbarkeit des Spannmittels an der ersten Stützfläche sichergestellt ist und eine möglichst hohe Spannkraft zwischen den Anlageflächen erzielt werden kann.

Die erste Anlagefläche und die zweite Anlagefläche sind vorzugsweise zu Längsachse des Aufnahmeraums geneigt, wobei der Winkel, in dem die erste Anlagefläche und die zweite Anlagefläche zu Längsachse des Aufnahmeraums geneigt sind, zwischen 25° und 45°, insbesondere 34°, beträgt.

Vorzugsweise sind die erste Aufnahme und die zweite Aufnahme einstückig mit dem Klemmabschnitts ausgebildet und insbesondere in einem Umformungsprozess hergestellt sind. Die Batteriepolklemme ist vorzugsweise einstückig aus einem Blech ausgestanzt und wird durch Umformen geformt, insbesondere durch ein Tiefzugverfahren und/oder Biegeprozesse geformt. Dadurch entfallen nachträgliche, aufwändige Fügeverfahren, beispielsweise Schweißen, Nieten oder Löten, sodass die Herstellungskosten der Batteriepolklemme reduziert werden können.

Beispielsweise wird die erste Aufnahme oder die zweite Aufnahme durch einen Abschnitt gebildet, der im Querschnitt betrachtet zu einem Dreieck umgeformt wird. Ein erster Teilabschnitt kann hierbei die Stützfläche und ein zweiter Teilabschnitt die Anlagefläche bilden. Ein dritter Teilabschnitt kann einen Zwischenabschnitt bilden, der den dreieckigen Querschnitt schließt und die Stützfläche und die Anlagefläche in ihrer Position relativ zueinander fixiert. Durch zusätzliche Teilabschnitte kann die Aufnahme, insbesondere die im Querschnitt dreieckige Ausformungen, zusätzlich gestützt und/oder stabilisiert werden, sodass auch höhere Spannkräfte durch die Aufnahme übertragen werden können.

Vorzugsweise ist des Weiteren ein Spannmittel vorgesehen, mit einem ersten Spannelement, dass sich an der ersten Stützfläche abstützt, einem zweiten Spannelement, dass sich an der zweiten Stützfläche abstützt, und mit einem Spannglied, das das erste Spannelement und das zweite Spannelement verbindet.

Das Spannglied kann ein länglicher Bolzen sein, mit einem ersten Spannabschnitt, der mit dem ersten Spannelement zusammenwirkt und einem zweiten Spannabschnitt, der mit dem zweiten Spannelement zusammenwirkt, wobei die Längsachsen des ersten Spannabschnitts und des zweiten Spannabschnitts relativ zueinander abgewinkelt sind, wobei der Winkel zwischen den Spannabschnitten im Wesentlichen dem Winkel zwischen den Stützflächen entspricht. Eine Längsachse des Spanngliedes verläuft vorzugsweise zumindest im Bereich der Stützflächen im Wesentlichen senkrecht zur Ebene der Stützflächen. Innerhalb der Aufnahmen kann das Spannglied gebogen ausgebildet sein, sodass die Längsachse des Spanngliedes im Bereich der Anlageflächen ebenfalls im Wesentlichen senkrecht zu den Anlageflächen verläuft, wodurch eine ideale Aufbringung einer Spannkraft zwischen den Aufnahmen möglich ist. Insbesondere kann eines der Spannelemente einstückig mit dem Spannglied ausgebildet sein.

Zumindest ein Spannelement kann ein Innengewinde und der korrespondierende Spannabschnitt ein zu dem Innengewinde korrespondierendes Außengewinde aufweisen. Das Spannglied ist also als Schraube und zumindest ein Spannelement als Mutter, die auf die Schraube aufgeschraubt wird, ausgebildet. Somit ist ein einfaches Aufbringen einer Spannkraft auf das Spannmittel durch Drehen des Spannelements relativ zum Stand Lied möglich.

Das Spannglied weist vorzugsweise einen zwischen dem ersten Spannabschnitt und dem zweiten Spannabschnitt angeordneten Zwischenabschnitt auf, wobei der Zwischenabschnitt zumindest abschnittsweise gekrümmt ausgebildet ist. Der gekrümmte Zwischenabschnitt befindet sich vorzugsweise in der ersten Aufnahme, sodass die Krümmung innerhalb der ersten Aufnahme geführt ist und zwischen den Aufnahmen ein geradliniger Abschnitt vorhanden ist, der eine ideale Aufbringung einer Spannkraft zwischen den Aufnahmen ermöglicht. Insbesondere hat der Zwischenabschnitt kein Gewinde, sodass dieser in Längsrichtung ungehindert in den Aufnahmen verschoben werden kann.

Am Zwischenabschnitt kann ein Anschlag vorgesehen sein, der sich an der ersten Anlagefläche und/oder der zweiten Anlagefläche abstützt. Der Anschlag kann zum einen das Spannglied bzw. das Spannmittel in einer Position relativ zu den Aufnahmen fixieren. Zum anderen kann der Anschlag eine Verlierersicherung bilden, sodass das Spannmittel auch in nicht montierten Zustand sicher an der Batteriepolklemme gehalten ist. Des Weiteren kann der Anschlag beispielsweise eine Verschiebung des Spanngliedes begrenzen, beispielsweise um sicherzustellen, dass ein gekrümmter Abschnitt des Spanngliedes sich nicht aus der Aufnahme heraus bewegt.

Des Weiteren kann an der ersten Aufnahme zumindest ein erster Halteabschnitt und/oder der zweiten Aufnahme zumindest ein zweiter Halteabschnitt vorgesehen sein. Die Halteabschnitte können das Spannmittel oder ein Spannelement des Spannmittels an der ersten und/oder der zweiten Stützfläche fixieren, insbesondere in Richtung einer Längsachse des Spannmittels im Bereich der ersten oder der zweiten Stützfläche und/oder senkrecht zur ersten oder zur zweiten Stützfläche fixieren. Die Halteabschnitte können das Spannmittel oder das Spannelement auch jeweils bezüglich der Längsachse drehfest fixieren. Insbesondere sind die Halteabschnitte durch einen Umformprozess hergestellt.
Zum einen kann der Halteabschnitt eine Verliersicherung für das Spannmittel, insbesondere für das jeweilige Spannelement, bilden, die verhindert, dass das Spannmittel bzw. das Spannmittel verloren gehen kann.

Des Weiteren kann durch den Halteabschnitt eine Verdrehsicherung gebildet sein, die das Spannelement oder das Spannglied gegen ein Verdrehen um die jeweilige Längsachse verhindert. Dies ist insbesondere erforderlich, wenn das Spanngliedes ein Gewinde aufweist, da zumindest das Spanngliedes oder eines der Spannelemente gegen ein Verdrehen gesichert werden muss, um ein Aufschrauben der Spannelemente auf das Spannglied zu ermöglichen.

Darüber hinaus kann der Halteabschnitt das Spannmittel, insbesondere die Spannelemente in Richtung der Längsachse an der jeweiligen Stützfläche fixieren, also einen Anschlag für das Spannmittel, insbesondere das jeweilige Spannelement bilden. Die Spannelemente kann somit in beide Richtungen an Stützelemente fixiert werden. Wird die Batteriepolklemme montiert, werden die Spannelemente auf die Stützflächen bewegt und drängen diese gegeneinander, sodass der Aufnahmeraum reduziert und somit die Batteriepolklemme am Batteriepol geklemmt wird. Zur Demontage der Batteriepolklemme werden die Spannelemente in die entgegengesetzte Richtung gedrängt, wobei diese an den Halteabschnitten anliegen und diese auseinander drängen. Somit werden die Aufnahmen, in welchen die Halteabschnitte vorgesehen sind, ebenfalls auseinandergedrängt, sodass der Aufnahmeraum der Batteriepolklemme zwangsweise geöffnet wird. Dadurch ist ein einfacheres Abziehen der Batteriepolklemme vom Batteriepole möglich.

Vorzugsweise werden die Halteabschnitte nach der Montage des Spannmittels an der Batteriepolklemme ausgebildet, sodass eine einfache Montage des Spannmittels möglich ist, dieses aber nach der der Stellung der Halterabschnitte unverlierbar bzw. in der gewünschten Position in der jeweiligen Aufnahme fixiert ist.

Weitere Vorteile und Merkmale ergeben sich aus der nachfolgenden Beschreibung in Verbindung mit den beigefügten Zeichnungen. Diese zeigen:
- Figur 1: eine perspektivische Ansicht einer erfindungsgemäßen Batteriepolklemme;
- Figur 2: eine Seitenansicht der Batteriepolklemme aus Figur 1;
- Figur 3: eine Seitenansicht der Batteriepolklemme aus Figur 1 ohne Spannmittel;
- Figur 4: eine Seitenansicht des Spannmittels der Batteriepolklemme aus Figur 1;
- Figur 5: eine Seitenansicht der Batteriepolklemme aus Figur 1 inan einer Batterie, mit aufgesetztem Werkzeug zu Montage;
- Figur 6: eine Seitenansicht einer zweiten Ausführungsform einer erfindungsgemäßen Batteriepolklemme;
- Figur 7: eine Seitenansicht einer dritten Ausführungsform einer erfindungsgemäßen Batteriepolklemme;
- Figur 8: eine Seitenansicht einer vierten Ausführungsform einer erfindungsgemäßen Batteriepolklemme;
- Figur 9: eine zweite Ansicht der Batteriepolklemme aus Figur 8;
- Figur 10: eine Seitenansicht einer fünften Ausführungsform einer erfindungsgemäßen Batteriepolklemme;
- Figur 11: eine zweite Ansicht der Batteriepolklemme aus Figur 10;
- Figur 12: eine perspektivische Ansicht einer sechsten Ausführungsform einer erfindungsgemäßen Batteriepolklemme;
- Figur 13: eine Seitenansicht der Batteriepolklemme aus Figur 12;
- Figur 14: eine Ansicht des Spannmittels der Batteriepolklemme aus Figur 12; und
- Figur 15: eine Seitenansicht der Batteriepolklemme aus Figur 12 ohne Spannmittel.

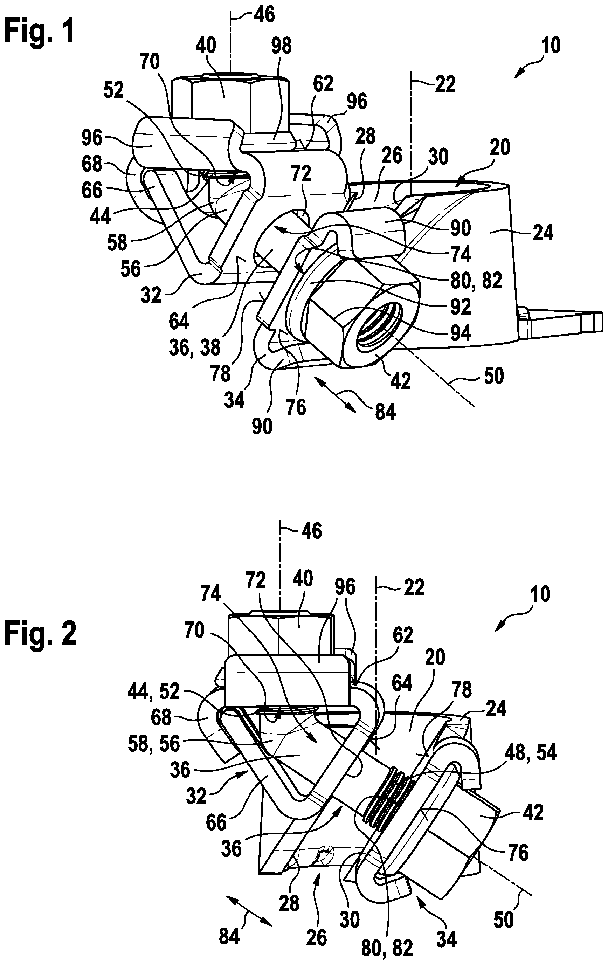

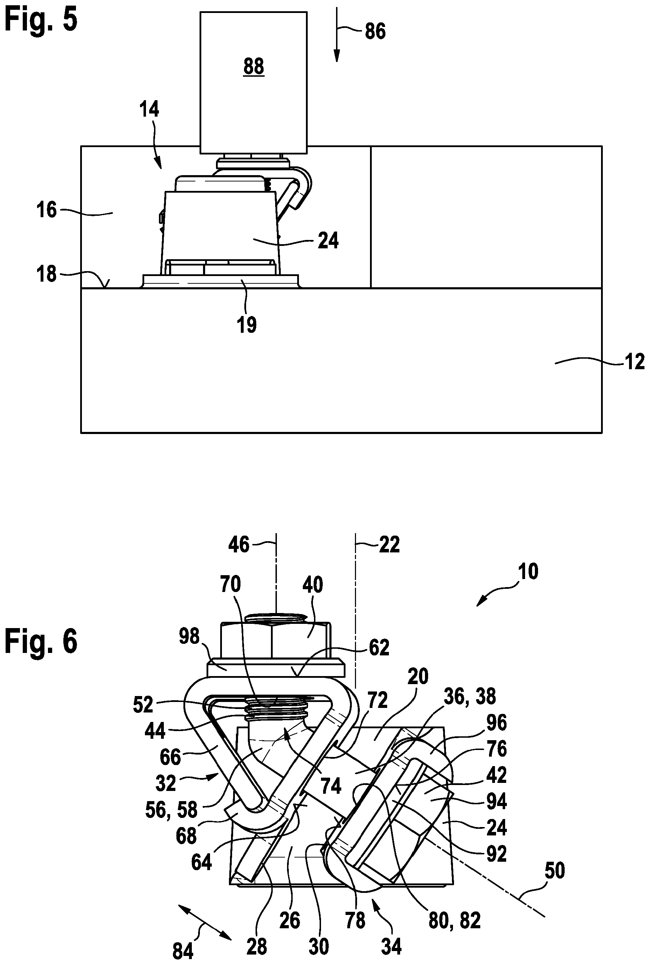

In den Figuren 1 und 2 ist eine Batteriepolklemme 10 zu Montage an einer Fahrzeugbatterie 12 (siehe Figur 5) gezeigt. Die Fahrzeugbatterie 12 hat üblicherweise zwei Batteriepole 14, von denen in Figur 5 lediglich ein Batteriepol 14 dargestellt ist. Der Batteriepol 14 ist in einer Polnische 16 angeordnet, die durch eine im Wesentlichen quaderförmige Aussparung an der Fahrzeugbatterie 12 gebildet ist. Der Batteriepol 14 ist im Wesentlichen zylindrisch ausgebildet und ragt von einer im Wesentlichen rechteckigen Grundfläche 18 ausgehend von einem Sockel 19 im Wesentlichen senkrecht in die Polnische 16 hinein.

Die Batteriepolklemme 10 hat einen Aufnahmeraum 20 für den Batteriepol 14, der im Wesentlichen zylindrisch ausgebildet ist. Die Batteriepolklemme 10 kann in einer Montagerichtung, die im Wesentlichen in Richtung der Längsachse 22 des Aufnahmeraums 20 und der Längsachse des Batteriepols 14 entspricht, auf den Batteriepol 14 aufgeschoben werden. Um das Aufschieben des Aufnahmeraums 20 auf den Batteriepol 14 zu erleichtern, kann der Aufnahmeraum 20 auch leicht konisch ausgebildet sein.

Der Aufnahmeraum 20 wird von einem Klemmabschnitt 24 in Umfangsrichtung bezüglich der Längsachse 22 zumindest abschnittsweise umschlossen, wobei in Umfangsrichtung eine Unterbrechung 26 vorgesehen ist, die von zwei Rändern 28, 30 begrenzt wird.

Am ersten Rand 28 ist eine erste Aufnahme 32 und am zweiten Rand 30 eine zweite Aufnahme 34 für ein Spannmittel 36 vorgesehen. Mit dem Spannmittel 36 können die Ränder 28, 30 aufeinander zu bewegt werden, also die Unterbrechung 26 und somit der Aufnahmeraum 20 verkleinert werden, um die Batteriepolklemme 10 auf den Batteriepol 14 zu verklemmen.

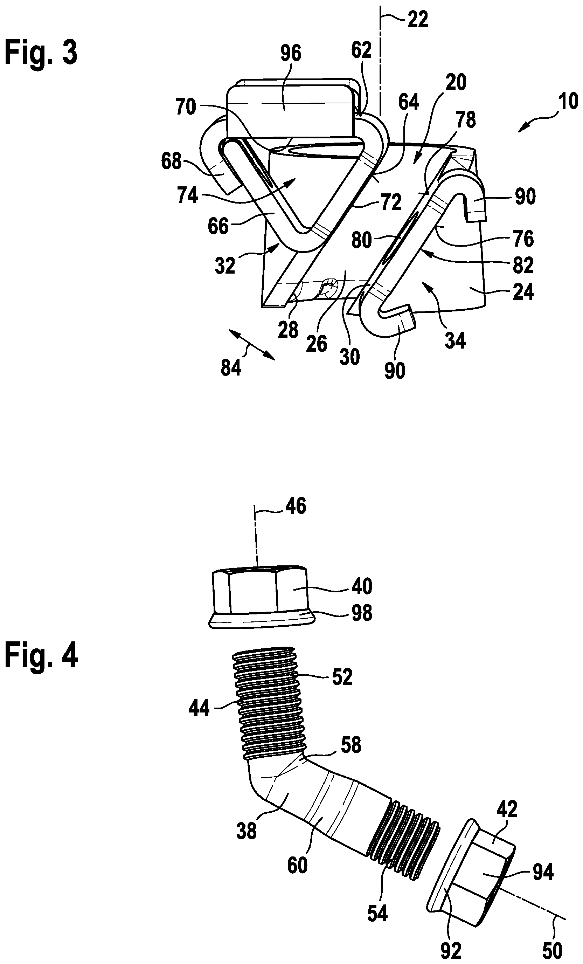

Wie in Figur 4 zu sehen ist, weist das Spannmittel 36 ein längliches Spanngliedes 38 sowie ein erstes Spannelemente 40 und ein zweites Spannelemente 42 auf. Das Spannglied 38 hat einen ersten Spannabschnitt 44 mit einer Längsachse 46 sowie einen zweiten Spannabschnitt 48 mit einer Längsachse 50. Die Spannabschnitte 44, 48 weisen jeweils ein Außengewinde 52, 54 auf. Zwischen den Spannabschnitten 44,48 ist ein Zwischenabschnitt 56 vorgesehen, der ohne Gewinde ausgebildet ist. Der Zwischenabschnitt 56 weist einen gekrümmten Bereich 58 auf, der in den ersten Spannabschnitt 44 übergeht. Des Weiteren ist am Zwischenabschnitt 56 ein Absatz 60 ausgebildet, der durch eine Vergrößerung des Durchmessers des Spanngliedes 38 gebildet ist. Die Spannelemente 40, 42 weisen jeweils ein zu den Außengewinde 52, 54 korrespondierendes Innengewinde auf.

Wie in den Figuren 1 bis 3 zu sehen ist, ist der Klemmabschnitt 24 einstückig ausgebildet, insbesondere aus einem ebenen Blech durch Umformen hergestellt.

Die erste Aufnahme 32 weist eine erste Stützfläche 62 auf, an der das erste Spannelement 40 anliegt und sich an dieser abstützt. Des Weiteren weist die erste Aufnahme 32 eine der zweiten Aufnahme 34 zugewandte Anlagefläche 64 auf. Wie insbesondere in den Figuren 2 und 3 zu sehen ist, ist die erste Stützfläche 62 bezüglich der Längsachse 22 des Aufnahmeraums 20 senkrecht angeordnet, weist also in montiertem Zustand (siehe Figur 5) senkrecht nach oben. Die erste Anlagefläche 64 ist in einem Winkel zur ersten Stützfläche 62 angeordnet und weist zur zweiten Aufnahme 34.

Die erste Stützfläche 62 ist in dieser Ausführungsform durch einen ersten umgebogenen Teilabschnitt des Klemmabschnitts 24 gebildet, die erste Anlagefläche 64 durch einen zweiten Teilabschnitt, der im Wesentlichen parallel zum Rand 28 angeordnet ist. Der erste Teilabschnitt und der zweite Teilabschnitt bilden gemeinsam mit einem dritten Teilabschnitt 66 einen dreieckigen Querschnitt, wobei der dritte Teilabschnitt 66 den ersten Teilabschnitt und den zweiten Teilabschnitt relativ zueinander abstützt. Am ersten Teilabschnitt, also der ersten Stützfläche 62, ist des Weiteren eine Lasche 68 vorgesehen, die die Aufnahme in sich zusätzlich stabilisiert. In der Stützfläche 62 sowie der Anlagefläche 64 ist jeweils eine Aussparung 70, 72 für das Spannmittel 36 gebildet. Die Aussparungen 70, 72 bilden hierbei einen Aufnahmekanal 74 für das Spannmittel 36.

Die zweite Aufnahme 34 ist in der hier gezeigten Ausführungsform durch einen umgebogenen Blechabschnitt gebildet, wobei eine zweite Stützfläche 76 auf einer ersten Seite des Blechabschnitts und eine zweite Anlagefläche 78 auf der zweiten, gegenüberliegenden Seite des Blechabschnitts ausgebildet ist. Der Blechabschnitt weist eine Aussparung 80 auf, die einen Kanal 82 für das Spannmittel 36 bildet.

Wie insbesondere in den Figuren 2 und 3 zu sehen ist, sind die Anlageflächen 64, 78 im Wesentlichen parallel zueinander und parallel zu den Rändern 28, 30 ausgerichtet. Die Aussparungen 72, 80 befindet sich auf einer gemeinsamen Geraden, die senkrecht zu den Anlageflächen 64, 78 verläuft. Die erste Stützfläche 62 und die zweite Stützfläche 76 sind dagegen relativ zueinander geneigt, befindet sich also den relativ zueinander geneigten Ebenen, wobei die erste Stützfläche 62 senkrecht zur Längsachse 22 des Aufnahmeraums 20 verläuft.

Die zweite Stützfläche 76 ist zur ersten Stützfläche 62 um einen Winkel von 30° bis 80°, insbesondere in einem Winkel von ca. 56°, also in einem Winkel 10° bis 60°, insbesondere in einem Winkel von 34°, zur Längsachse 22 des Aufnahmeraums 20, geneigt.

Die Neigung der ersten Stützfläche 62 zur zweiten Stützfläche 76 wird durch die im Querschnitt dreieckige Form der ersten Aufnahme 32 hergestellt.

Wie in Figur 2 zu sehen ist, ragt der erste Spannabschnitt 44 des Spanngliedes 38 durch die Aussparung 70 der ersten Aufnahme 32. Das auf den ersten Spannabschnitt 44 aufgeschraubte Spannelemente 40 liegt an der ersten Stützfläche 62 an. Der gekrümmte Bereich 58 des Zwischenabschnitts 56 befindet sich im Aufnahmekanal 74. Der übrige Zwischenabschnitt 56 befindet sich zwischen den Anlageflächen 64,78. Der zweite Spannabschnitt 48 ragt durch die Aussparung 80. Das zweite Spannelement 42 ist auf das Außengewinde 54 aufgeschraubt und liegt an der zweiten Stützfläche 78 flächig an.

Wird das erste Spannelement 40 weiter auf das Spanngliedes 38 aufgeschraubt, drückt das Spannelemente 40 auf die Anlageflächen 62. Durch das Spannglied 38 wird zwischen den Anlageflächen 64,78 eine Spannkraft 84 erzeugt, wobei die Spannrichtung der Spannkraft 84 senkrecht zu den Anlageflächen 64,78 ausgerichtet ist. Die ursprüngliche Wirkungsrichtung der durch das Spannelement 40 aufgebrachten Kraft ist dagegen senkrecht zur ersten Stützfläche 62 ausgerichtet.

Durch die vorstehend beschriebene Batteriepolklemme erfolgt also eine Umlenkung der Kraft, sodass diese nicht in Richtung der Längsachse 22 des Aufnahmeraums 20 wirkt, sondern quer zu dieser.

Wie in Figur 5 zu sehen ist, verläuft die Aufsetzrichtung 86 für ein Werkzeug 88 parallel zur Längsachse des Aufnahmeraums 20, sodass das erste Spannelemente 40 ohne oder nur mit geringen Einschränkungen durch ein Werkzeug 88 erreichbar ist.

Bei der Montage der Batteriepolklemme 10 wird das Werkzeug 88 in Aufsetzrichtung 86 gegen die Batteriepolklemme 10 gedrückt, sodass bei der Montage der Batteriepolklemme 10 die Batteriepolklemme gegen den Sockel 19 der Polnische 16 gedrückt wird, sodass sichergestellt ist, dass die Batteriepolklemme 10 vollständig auf den Batteriepol 14 aufgeschoben ist.

Bei der vorstehend beschriebenen Batteriepolklemme 10 ist also die Aufsetzrichtung 86 des Montagewerkzeugs 88 relativ zur Spannrichtung 84 des Spannmittels 36 abgewinkelt, wobei der Winkel der Stützflächen 62, 76 so gewählt ist, dass eine gute Zugänglichkeit des Spannmittels 36 sichergestellt ist und gleichzeitig eine gute Kraftübertragung in Umfangsrichtung auf den Klemmabschnitt 24 erfolgt.

Wie in den Figuren 1 bis 3 zu sehen ist, sind an der zweiten Stützfläche 76 zwei erste Halteabschnitte 90 vorgesehen, die durch umgebogene Bereiche der Stützfläche 76 gebildet sind. Diese ersten Halteabschnitte 90 umgreifen einen Flansch 92 des zweiten Spannelements 42, sodass das zweite Spannelemente 42 senkrecht zur zweiten Stützfläche 76 fixiert ist. Des Weiteren liegen die ersten Halteabschnitte 90 an einem am Außenumfang des Spannelements 42 angeordneten Drehmomentübertragungsprofils 94 an, sodass das Spannelement 42 nicht um seine Längsachse 50 gedreht werden kann.

An der ersten Stützfläche 62 sind zweite Halteabschnitte 96 vorgesehen, die einen Flansch 98 des ersten Spannelements 40 umgreifen und somit das Spannelement 40 in Längsrichtung 46 an der ersten Stützfläche 62 fixieren. Die zweiten Halteabschnitte 96 sind kürzer ausgebildet als die ersten Halteabschnitte 90, sodass das erste Spannelement 40 um seine Längsachse gedreht werden kann, um eine Spannkraft auf den Klemmabschnitt 24 ausüben zu können.

Die Halteabschnitte 90, 96 werden vorzugsweise nach dem Einsetzen des Spannmittels 36 in die Aufnahmen 32, 34 durch Umbiegen der entsprechenden Abschnitte hergestellt. Dies stellt eine einfache Montage des Spannmittels 36 sowie nach dem Umbiegen einen zuverlässigen Halt des Spannmittels 36, insbesondere der Spannelemente 40,42, sicher.

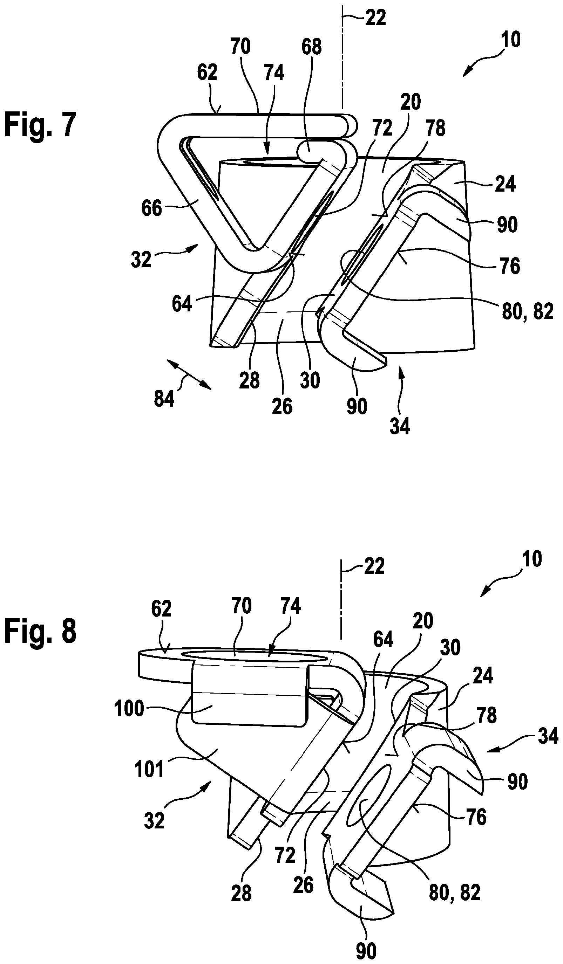

In den Figuren 6 und 7 sind Abwandlungen der vorstehend beschriebenen Batteriepolklemme 10 gezeigt.

In Figur 6 ist der dritte Teilabschnitt 66 eine umgebogene Verlängerung der ersten Stützfläche 62. Die Lasche 68 ist hier an der Anlagefläche 64 vorgesehen.

Des Weiteren sind die ersten Halteabschnitte 90 lediglich rechtwinklig umgebogen, sodass diese eine Verdrehsicherung bilden aber keine Fixierung in Richtung der Längsachse 50.

In Figur 7 sind der dritte Teilabschnitt 66 an der ersten Anlageflächen 64 und die erste Stützfläche 62 am dritten Teilabschnitt 66 angeordnet. Die Lasche 68 ist ebenfalls an der Anlagefläche 64 ausgebildet.

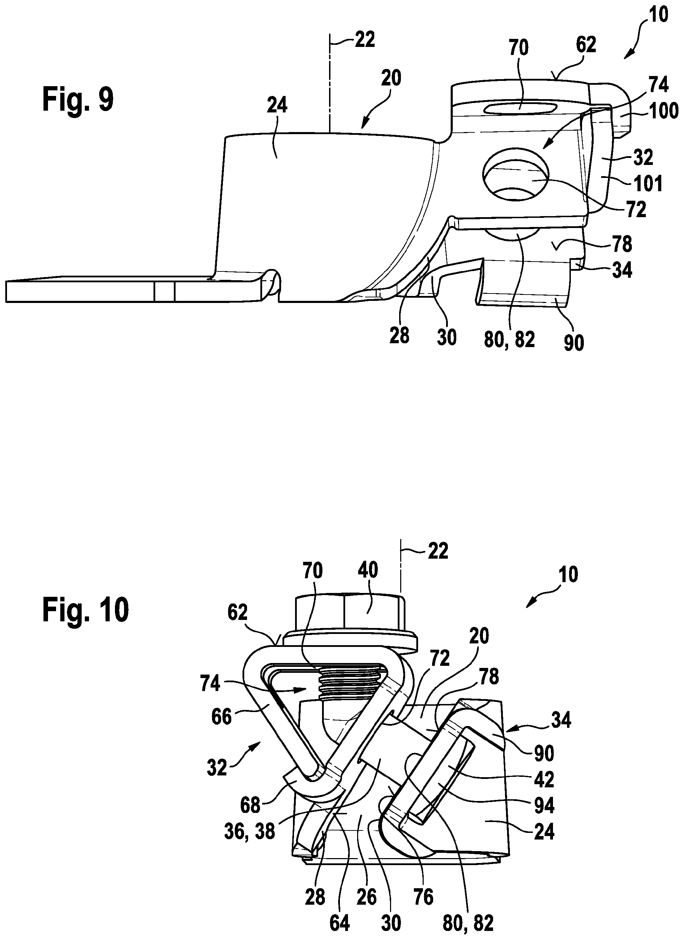

In der in den Figuren 8 und 9 gezeigten Ausführungsform ist die Versteifung der im Querschnitt dreieckigen Form der ersten Aufnahme 32 durch einen seitlichen, dreieckigen Abschnitt 98 bereitgestellt, der zur Anlagefläche 64 abgewinkelt ist. An der ersten Stützfläche 62 ist eine Lasche 100 vorgesehen, die den dreieckigen Abschnitt 98 fixiert.

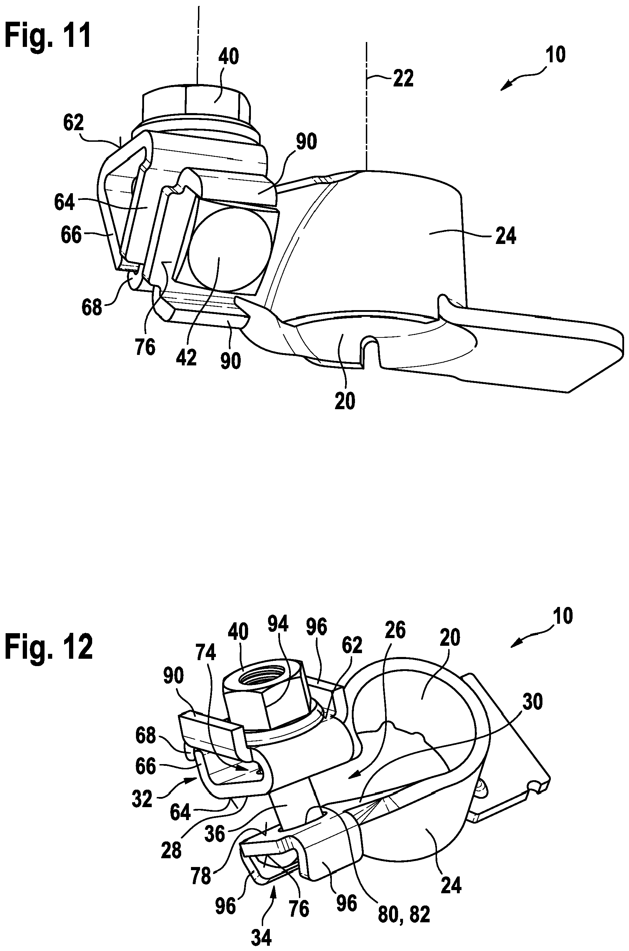

Die in den Figuren 10 und 11 gezeigte Ausführungsform entspricht im Wesentlichen der in Figur 6 gezeigten Ausführungsform. Das zweite Spannelemente 42 ist aber einstückig mit dem zweiten Spannabschnitt 48 ausgebildet. Am zweiten Spannabschnitt ist des Weiteren kein Gewinde vorgesehen.

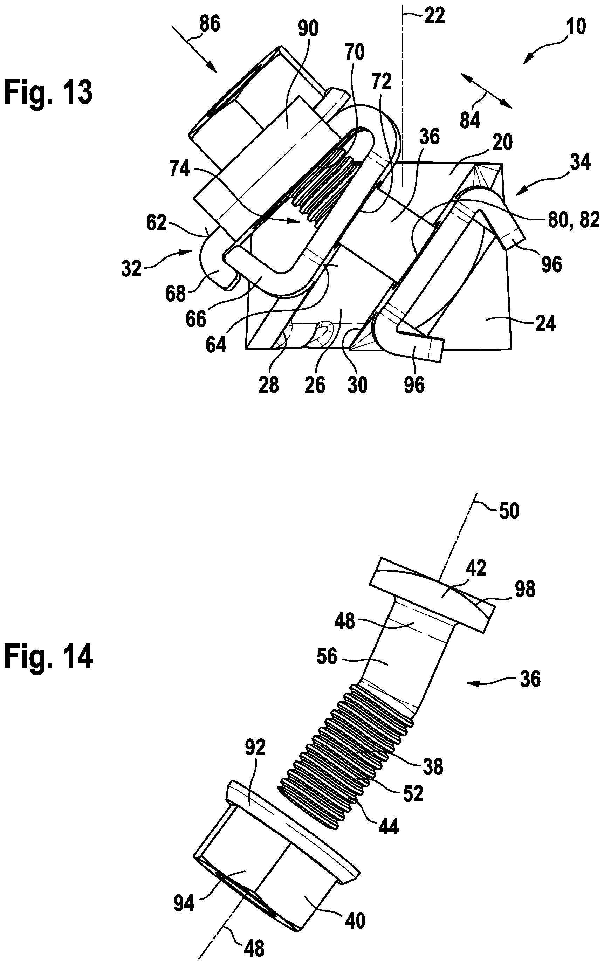

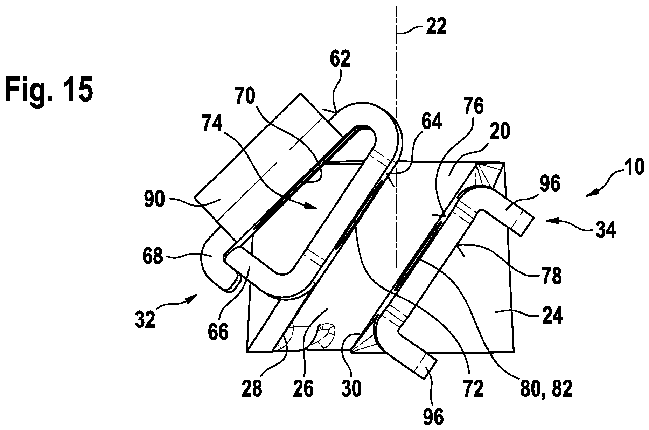

Der Aufbau der in den Figuren 12-15 gezeigten Batteriepolklemme 10 entspricht im Wesentlichen der in den Figuren 1 bis 4 gezeigten Batteriepolklemme 10 wobei das Spannmittel 36 im Wesentlichen dem in den Figuren 10 und 11 gezeigten Spannmittel 36 entspricht. Es kann aber auch das in Figur 4 verwendete Spannmittel 36 verwendet werden. In dieser Ausführungsform sind lediglich sowohl die erste Stützfläche 62 wie auch die zweite Stützfläche 76 relativ zur Längsachse 22 des Aufnahmeraums 20 geneigt. Die erste Stützfläche 62 ist hier in einem Winkel von 46° zur Längsachse 22 geneigt. Die zweite Stützfläche 76 ist in einem Winkel von 34° zu Längsachse 22 geneigt und wie auch in der in den Figuren 1 bis 4 gezeigten Ausführungsform im Wesentlichen parallel zu den Anlageflächen 64,78.

Das Spannelement 36 kann grundsätzlich beliebig ausgebildet sein. Es ist lediglich sicherzustellen, dass das Spannelemente 32 an den relativ zueinander abgewinkelten Stützfläche 62,76 anliegt und vorzugsweise im Bereich zwischen den Anlageflächen 64, 78 senkrecht zu den Anlageflächen verläuft, sodass die Spannrichtung senkrecht zu den Anlageflächen 64, 78 verläuft.

**Bezugszeichenliste**

| | | | |
|---|---|---|---|
| 10 | Batteriepolklemme | 56 | Zwischenabschnitt |
| 12 | Fahrzeugbatterie | 58 | gekrümmter Bereich |
| 14 | Batteriepol | 60 | Absatz |
| 16 | Polnische | 62 | erste Stützfläche |
| 18 | Grundfläche | 64 | erste Anlagefläche |
| 19 | Sockel | 66 | dritter Teilabschnitt |
| 20 | Aufnahmeraum | 68 | Lasche |
| 22 | Längsachse des Aufnahmeraums | 70 | Aussparung |
| | | 72 | Aussparung |
| 24 | Klemmabschnitt | 74 | Aufnahmekanal |
| 26 | Unterbrechung | 76 | zweite Stützfläche |
| 28 | erste Rand | 78 | zweite Anlagefläche |
| 30 | zweiter Rand | 80 | Aussparung |
| 32 | erste Aufnahme | 82 | Kanal |
| 34 | zweite Aufnahme | 84 | Spannkraft |
| 36 | Spannmittel | 86 | Aufsetzrichtung |
| 38 | Spannglied | 88 | Werkzeug |
| 40 | erstes Spannelement | 90 | erster Halteabschnitt |
| 42 | zweites Spannelement | 92 | Flansch |
| 44 | erster Spannabschnitt | 94 | Drehmomentübertragungsprofil |
| 46 | Längsachse des ersten Spannabschnitts | | |
| | | 96 | zweiter Halteabschnitt |
| 48 | zweiter Spannabschnitt | 98 | Flansch des ersten Spannelements |
| 50 | Längsachse des zweiten Spannabschnitts | | |
| | | 100 | Lasche |
| 52 | Außengewinde | 101 | dreieckiger Abschnitt |
| 54 | Außengewinde | | |

## Patentansprüche

1. Batteriepolklemme (10), insbesondere für eine Fahrzeugbatterie (12) in einem Fahrzeug, mit einem Klemmabschnitt (24) für einen Batteriepol (14) der Fahrzeugbatterie (12), der einen, insbesondere im Wesentlichen zylindrischen, Aufnahmeraum (20) für den Batteriepol (14) der Fahrzeugbatterie (12) in Umfangsrichtung zumindest abschnittsweise umschließt und in Umfangsrichtung eine Unterbrechung (26) mit einander zugewandten Rändern (28, 30) aufweist, wobei an einem ersten Rand (28) des Klemmabschnitts (24)eine erste Aufnahme (32) für ein Spannmittel (36) und an einem zweiten Rand (30) des Klemmabschnitts (24) eine zweite Aufnahme (34) für das Spannmittel (36) vorgesehen sind, wobei die erste Aufnahme (32) eine erste Stützfläche (62) für das Spannmittel (36) und die zweite Aufnahme (30) eine zweite Stützfläche (76) für das Spannmittel (36) aufweist, wobei die die erste Stützfläche (62) und die zweite Stützfläche (76) relativ zueinander geneigt sind.

2. Batteriepolklemme nach Anspruch 1, **dadurch gekennzeichnet, dass** die erste Stützfläche (62) in einer senkrecht zu Längsachse (22) des Aufnahmeraums (20) verlaufenden Ebene verläuft.

3. Batteriepolklemme nach Anspruch 1, **dadurch gekennzeichnet, dass** die erste Stützfläche (62) und die zweite Stützfläche (76) bezüglich der Längsachse (22) des Aufnahmeraums (20) geneigt sind.

4. Batteriepolklemme nach Anspruch 3, **dadurch gekennzeichnet, dass** der Winkel, in dem die erste Stützfläche (62) zur Längsachse (22) des Aufnahmeraums (20) geneigt ist, zwischen 35° und 55° beträgt, insbesondere 45° beträgt, und der Winkel, in dem die zweite Stützfläche (76) zur Längsachse (22) des Aufnahmeraums (20) geneigt ist, größer ist als der Winkel, in dem die erste Stützfläche (62) zur Längsachse (22) geneigt ist.

5. Batteriepolklemme nach einem der vorhergehenden Ansprüche, **dadurch gekennzeichnet, dass** die erste Aufnahme (32) eine erste Anlagefläche (64) und die zweite Aufnahme (34) eine zweite Anlagefläche (78) aufweisen wobei die Anlageflächen (64, 78) einander zugewandt sind und in im Wesentlichen parallelen Ebenen verlaufen.

6. Batteriepolklemme nach Anspruch 5, **dadurch gekennzeichnet, dass** die erste Anlagefläche (64) und die zweite Anlagefläche (78) zur Längsachse (22) des Aufnahmeraums (20) geneigt sind, wobei der Winkel, in dem die erste Anlagefläche (64) und die zweite Anlagefläche (78) zur Längsachse des Aufnahmeraums geneigt sind, zwischen 25° und 45° beträgt, insbesondere 34° beträgt.

7. Batteriepolklemme nach einem der vorhergehenden Ansprüche, **dadurch gekennzeichnet, dass** die erste Aufnahme (32) und die zweite Aufnahme (34) einstückig mit dem Klemmabschnitts (24) ausgebildet sind und insbesondere in einem Umformungsprozess hergestellt sind.

8. Batteriepolklemme nach einem der vorhergehenden Ansprüche, **dadurch gekennzeichnet, dass** ein Spannmittel (36) vorgesehen ist, mit einem ersten Spannelement (40), dass sich an der ersten Stützfläche (62) abstützt, einem zweiten Spannelement (42), dass sich an der zweiten Stützfläche (76) abstützt, und mit einem Spannglied (38), dass das erste Spannelement (40) und das zweite Spannelement (42) verbindet.

9. Batteriepolklemme nach Anspruch 5, **dadurch gekennzeichnet, dass** das Spannglied (38) ein Bolzen ist, mit einem ersten Spannabschnitt (44), der mit dem ersten Spannelement (40) zusammenwirkt und einem zweiten Spannabschnitt (48), der mit dem zweiten Spannelement (42) zusammenwirkt, wobei die Längsachsen (46, 50) des ersten Spannabschnitts (44) und des zweiten Spannabschnitts (48) relativ zueinander abgewinkelt sind.

10. Batteriepolklemme nach Anspruch 6, **dadurch gekennzeichnet, dass** das erste Spannelement (40) und /oder das zweite Spannelemente (42) ein Innengewinde aufweisen und der erste Spannabschnitt (44) und oder der zweite Spannabschnitt (48) jeweils ein zum Innengewinde korrespondierendes Außengewinde (52, 54) aufweisen.

11. Batteriepolklemme nach einem der Ansprüche 6 und 7, **dadurch gekennzeichnet, dass** das Spannglied (38) einen zwischen dem ersten Spannabschnitt (44) und dem zweiten Spannabschnitt (48) angeordneten Zwischenabschnitt (56) aufweist, wobei der Zwischenabschnitt (56) einen gekrümmten Bereich (58) aufweist.

12. Batteriepolklemme nach Anspruch 8, **dadurch gekennzeichnet, dass** am Zwischenabschnitt (56) ein Anschlag (60) vorgesehen ist, der sich an der ersten Anlagefläche (64) und/oder der zweiten Anlagefläche (78) abstützt.

13. Batteriepolklemme nach einem der vorhergehenden Ansprüche, **dadurch gekennzeichnet, dass** an der ersten Aufnahme (32) zumindest ein erster Halteabschnitt (90) und/oder der zweiten Aufnahme (34) zumindest ein zweiter Halteabschnitt (96) vorgesehen ist, wobei die Halteabschnitte (90, 96) das Spannmittel (36) oder ein Spannelement (40, 42) des Spannmittels (36) an der ersten und/oder der zweiten Stützfläche (62, 76) fixieren, insbesondere in Richtung einer Längsachse (46, 50) des Spannmittels (36) im Bereich der ersten oder der zweiten Stützfläche (62, 76) und/oder senkrecht zur ersten oder zur zweiten Stützfläche (62, 76) fixiert und/oder bezüglich der Längsachse (46, 50) drehfest fixiert, wobei die Halteabschnitte (90, 96) insbesondere durch einen Umformprozess hergestellt ist.
